# EUROPEAN PATENT SPECIFICATION

(11) **EP 4 183 630 B1**
(45) Date of publication and mention of the grant of the patent: **18.06.2025**
(21) Application number: 21209902.2
(22) Date of filing: 23.11.2021
(51) Int. Cl.: B60Q 1/24

(54) **METHOD FOR MODIFYING A LIGHT SIGNAL EMITTED BY A ROAD VEHICLE AND SIGNALING DEVICE**
VERFAHREN ZUR MODIFIZIERUNG EINES VON EINEM STRASSENFAHRZEUG AUSGESANDTEN LICHTSIGNALS UND SIGNALGERÄT
PROCÉDÉ DE MODIFICATION D'UN SIGNAL LUMINEUX ÉMIS PAR UN VÉHICULE ROUTIER ET DISPOSITIF DE SIGNALISATION

(43) Date of publication of application: 24.05.2023
(73) Proprietor: Bayerische Motoren Werke Aktiengesellschaft, 80809 München (DE)
(72) Inventor: Zaki, Tarek, 81829 München (DE)

(56) References cited:
- DE-A1- 102017 120 358
- US-A1- 2018 118 099
- US-A1- 2018 126 897
- US-A1- 2018 251 064
- US-B1- 10 134 280

## Description

The invention concerns a method for modifying a light signal and a road vehicle with a controller and a signaling device emitting such a modified signal.

Road vehicles have been equipped to emit optical light signals to the surrounding of the vehicle. There have been some applications like messages to other vehicles, messages to passengers about the possibility to cross the street in front of the vehicle and messages to cyclists about the imminent opening of a door. The emission of these light signals can be easily performed on surfaces which are dark, flat, and horizontal. However, most surfaces in the surroundings of a vehicle do not meet these conditions. US 2018/0118099 A1, DE 10 2017 120 358 A1, US 2018/0251064 A1, US 2018/0126897 A1 and US 10,134,280 B1 each disclose an image projection apparatus for a vehicle that projects an image onto a road surface or other projection surface.

It is an object of the present invention to improve the emission of optical light signals from road vehicles.

This object is achieved by the subject matter of the independent claims. Advantageous modifications are explained in the dependent claims.

A first aspect of the present invention is a method of modifying an optical light signal
which is to be projected from a vehicle onto a surface in the periphery of the vehicle, the method comprising:
determining a first image which is to be projected onto the surface by means of the light signal;
determining, using an environment representation device which comprises a surface distance measurement device and an optical properties determination device, data representing the surface onto which the light signal is to be projected;
modifying the light signal so that the image which is projected onto the surface can be visually correctly perceived as the first image by an observer based on the data representing the surface;
wherein the data representing the surface comprise at least three-dimensional spatial coordinates of the surface. "Light" in the sense of this invention is electromagnetic radiation which can be detected by the eye of a human, an animal or a camera.

An "optical light signal" in the sense of this invention is an image which is created by a projector or a beamer. Typically, such a light signal is created by digitally controlling a number of light sources or by directing the beam of a single light source into different directions e. g. by a MEMS device.

The "surface" onto which the optical light signal is to be projected is shown herein as the ground. However, the term may also include a wall or any other object which extends upward (against the direction of gravity) from the ground. This further includes the body of another vehicle. Such a surface may also consist partially in an area of the ground and in other parts of the surface(s) of one or more walls or other objects in the light path.

Light signals are often projected onto the pavement of the road in front of the vehicle or onto a sidewalk on the side of the vehicle. These surfaces are relatively flat and rather horizontal. Tolerances in inclination of a few degrees do not have a big effect on the intensity of the light signal. As the curvature of such surfaces is normally also limited, distortion does not affect the light signal very much. However, under circumstances which are not so close to ideal, the perception of the light signal on a surface with a significant amount of inclination and/or curvature will show distortion and or strong variations in intensity, depending on the geometry of the surface. As mentioned above, it may become necessary to project the image partially onto the ground and other parts of the image onto one or more walls or other obstructions. The solution according to the first aspect results in projected light signals which are correctly perceived by an observer, irrespective of surface geometry, because the modification adapts the projected light signal to the respective surface.

In some embodiments, the method further comprises:
determining a position of an observer of the projected light signal in three-dimensional space relative to the vehicle;
modifying the light signal so that the image which is projected onto the surface can be visually correctly perceived as the first image by the observer based on the position of the observer.

An "observer" in the sense of this invention is often a human observer, be it an occupant of the vehicle like the person driving the vehicle or a person in the periphery of the vehicle like a passenger, a person riding a bicycle, a motorcycle or a scooter. The term "observer" may further comprise an animal. Another "observer" may be camera and electronics of another road vehicle, which may or may not be an autonomous vehicle.

The position of the observer relative to the projected light signal is also very important for the light signal to be perceived correctly. Therefore, it is very helpful if the position of the observer is also taken into account to modify the projected image.

In some embodiments, the modification of the light signal is based on optical properties of the surface.

"Optical properties" of the surface in the sense of this invention are color, brightness (i. e. intensity), reflectivity, surface structure.

It is helpful if the optical light signal is modified so that it is easier to perceive by the observer. For example, on a light-colored surface, the light signal should be displayed in a darker color. On a very dark or black surface the optical light signal should be projected in white-color.

In some embodiments, the modification of the light signal is based on data representing environmental conditions.

"Environmental conditions" in the sense of this invention are humidity which can be detected by the rain sensor of the vehicle and the temperature of the surrounding of the vehicle. Other sensory data which is detected from the environment of the vehicle can also be used. An example is the sound of a siren detected with a microphone.

It is helpful to determine environmental conditions like rain or freezing temperatures and use data on these environmental conditions in order to modify the signal accordingly. A black surface of the road can exhibit mirror like reflection when it is wet with rain or covered by a few millimeters of water. It is helpful if this mirror like property of the surface is taken into account for the modification of the optical light signal.

In some embodiments, the determination of the position of the observer comprises determining a position of a headbox or an eye position of the observer.

Cameras and lidar or radar sensors can be used in order to determine the position of a headbox or the eye position of the observer. To determine the eye position, the method of eye tracking is often used. Using data on the position of the headbox or the eye position of the observer will allow the calculation of the modification to become more precise.

In some embodiments, the modification of the light signal is based on the presence of an obstruction.

An "obstruction" in the sense of the invention is an object which is preventing the observer from perceiving the optical light signal correctly if it is blocking the line of sight. A wall for example may obstruct the view of the observer or result in a distorted image when the image is supposed to be projected on the surface of the ground on which the vehicle is standing.

It is helpful to take obstructions like walls into account and modify the optical light signal accordingly so that it can be better perceived by the observer without being blocked or distorted.

A second aspect of the present invention is a computer program comprising instructions which, when the program is executed by a computer, cause the computer to carry out the method according to the first aspect or any of its embodiments.

A third aspect of the present invention is a computer readable storage medium comprising instructions which, when executed by a computer, cause the computer to carry out the method according to the first aspect or any of its embodiments.

A fourth aspect of the present invention is a signaling device of a vehicle, as defined in claim 9.

A "signaling device" in the sense of this invention is a device which is suitable to output the light signal representing the image to the surroundings of the vehicle. A typical example of a signaling device comprises a control computer and a projector which is mounted to the vehicle and which is beaming information onto a surface in the periphery of the vehicle. The headlights of the vehicle can also be used as a projector. The method of the first aspect can be beneficially realized with a device according to the fourth aspect.

As mentioned, the signaling device is configured to modify the optical light signal according to data representing at least three-dimensional spatial coordinates of the surface.

Such a signaling device is used to avoid distortions of the optical light signal and/or to avoid missing parts of the image of the optical light signal.

In some embodiments, the signaling device is configured to modify the optical light signal according to data representing a position of a headbox or an eye position of the observer.

Such a signaling device is able to display the image of the optical light signal correctly independent of the position of the observer.

A fifth aspect of the present invention is a road vehicle comprising a signaling device according to the fourth aspect.

The method according to the first aspect is preferably executed with one of the devices according to the fourth aspect, especially one of the aspect embodiments. The devices according to the fourth are preferably configured to execute the method according to the first aspect, especially one of its embodiments.

Further advantages, features and applications can be found in the detailed description as follows.
**Fig. 1** is a block diagram;
**Fig. 2** is a first schematic front view of a vehicle emitting a warning signal;
**Fig. 3** is a x-y graph of the intensity of a warning signal on a surface;
**Fig. 4** is a second schematic front view of a vehicle emitting a warning signal;
**Fig. 5** shows the warning signal as perceived by an observer;
**Fig. 6** shows the warning signal as projected;
**Fig. 7** is a top view of a road vehicle emitting an optical light signal;
**Fig. 8** is a second top view of a road vehicle emitting an optical light signal;
**Fig. 9** is a third top view of a road vehicle emitting an optical light signal;
Fig. 10 is a fourth top view of a road vehicle emitting an optical light signal;
**Fig. 11** is a flow diagram of the method to modify a light signal.

Throughout the Figures, the same reference numerals are used for the same elements of the invention or for elements corresponding to each other.

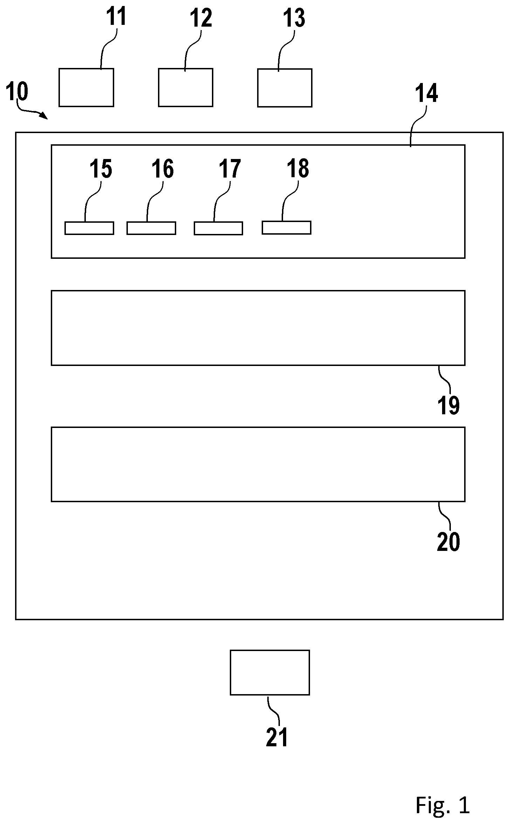

**Fig. 1** is a block diagram showing the controller 10 of the vehicle 1. This controller 10 is connected to sensors like the camera system 11, which may contain a VCSEL or other illumination system, the radar or lidar sensors 12 for measuring the distance of objects and an outdoor microphone 13. Further, the controller 10 is connected to sensors like rain sensor (not shown), temperature sensor (not shown), humidity sensor (not shown), in-cabin sensors and other sensors. An environment representation device 14 creates data of the objects in the environment of the vehicle. This environment representation device 14 contains an image classifier 15 to determine objects like walls, pavement of the road, road signs, trees and other objects.

Further, the image classifier 15 is equipped to determine the presence of humans, animals and other vehicles like cars, motorcycles, scooters and bicycles. For animals and humans, the environment representation device 14 also contains a device 16 for the determination of a head box and/or for eye tracking. This device 16 for determining a position of an observer is configured to detect the position in space of a head box of a human or an animal and/or the position in space of an eye or the eyes of a human or an animal relative to the vehicle with the controller 10. The environment representation device 14 also contains a surface distance measurement device 17 and an optical properties determination device 18.

The observer position determination device 16, the surface measurement device 17 and the optical properties determination device 18 will build their respective data based on sensor signals from the camera system 11 and the radar or lidar sensors 12. These sensor signals are processed by the image classifier 15. A decision logic device 19 receives data from the image classifier 15 in the environment representation device 14. These received data are a representation of the periphery of the vehicle. The data received by the decision logic device 19 will contain data representing positions of animated beings like humans or animals in the surroundings of the vehicle. The data received by the decision logic device 19 will further contain data representing positions of other vehicles in the surroundings of the vehicle. The data received by the decision logic device 19 will also contain data representing a three-dimensional map of the surroundings of the vehicle. These data will represent the relative distances of objects in the surrounding of the vehicle like the pavement, trees, walls and sidewalks The term "distance" as used herein comprises a horizontal distance from the vehicle to the object, an angular distance, for example an angle with respect to the driving direction of the vehicle and/or a distance in height relative to the vehicle. These map data are obtained from the surface measurement device 17. It should be understood that the data received by the decision logic device 19 from the environment representation device 14 are dynamic data. This means on one hand that the vehicle may be moving. Thereby the relative distances of objects in the surrounding of the vehicle will change. Furthermore, the relative distances between objects in the surrounding of the vehicle may also change because humans, animals or vehicles may be moving with respect to pavement, trees, walls and sidewalks.

The decision logic device 19 is configured to determine an image which should be projected onto a surface in the surroundings of the vehicle. This image may be a line showing the recommended distance for a bicycle, motorcycle or other vehicle to observe when passing the vehicle. This line may be enhanced by characters indicating the recommended distance like "1.5m" or "5ft", depending on the location. The image may further be a projection of a light beam to serve as a deterrent for an animal approaching the vehicle. The image may also be a projection outlining the rescue lane or an emergency corridor in the case of a traffic jam. The image may also be an indication of a suggested walking direction for a person exiting the vehicle. Another example of the image can be a simple warning sign.

The decision logic device 19 will, after determination of the image, pass data representing the image to the signaling device 20. The decision logic device 19 will also indicate to the signaling device 20 onto which surface in the surroundings of the vehicle the image should be projected. The signaling device 20 will further receive data from the environment representation device 14. These data will especially include data representing the distance of the surface from the vehicle. These distance data will be received by the signaling device 19 via the environment representation device 14 from the surface measurement device 17. In the same manner, the signaling device 20 will receive data on the optical properties of the surface from the optical properties determination device 18. Normally the signaling device 19 will simply adapt the light signal representing the image according to the relative angle between light beam and the projection surface so that the image can be perceived correctly by an observer.

Based on the data from the distance measurement device 17 and the optical properties determination device 18, the signaling device 20 calculates the light signal to be emitted by the transducer 21. Further the signaling device 20 determines if the light signal emitted by the transducer 21 is to be modified. Such a modification becomes necessary if the surface onto which the optical light signal is to be projected is not horizontal. Other modifications may become necessary to compensate for the optical properties of the surface onto which the optical light signal is to be projected. This will be explained in detail below.

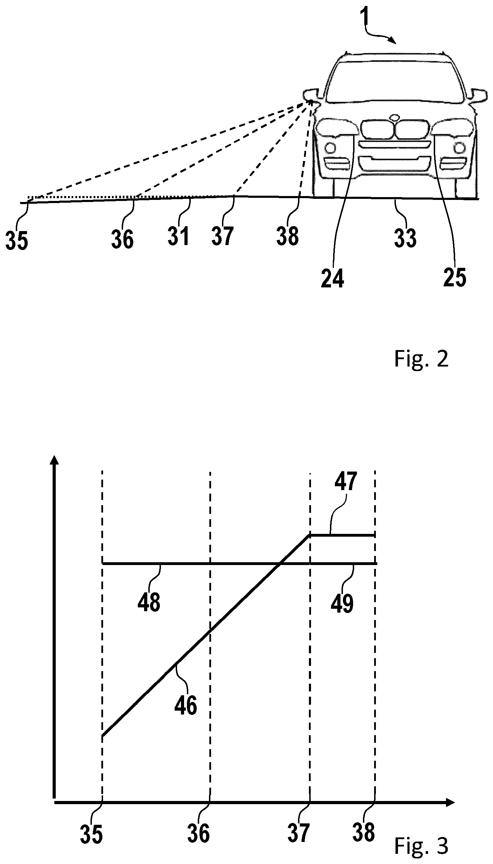

**Fig. 2** is a first schematic front view of a vehicle emitting a warning signal. It shows the vehicle 1 with a transducer 21 on the right-hand mirror and with headlights 24 and 25. The mounting of the transducer 21 to the right-hand mirror is only shown as an example. There are numerous other possibilities where the transducer 21 can be mounted to the vehicle 1. Some of these possibilities are the B column, the sill underneath the doors or the bumper. It is to be understood that it is also possible to mount several transducers 21. The headlights 24 and 25 may also be used as transducers.

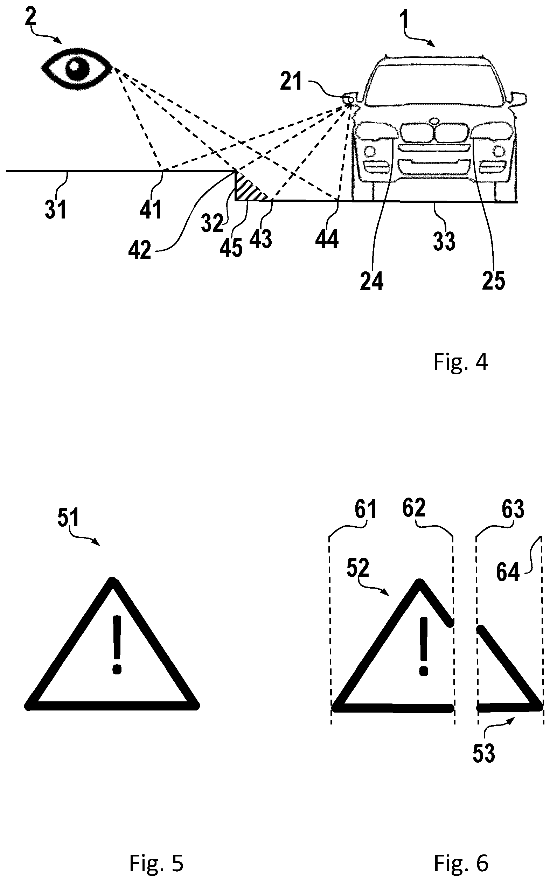

A warning signal is to be projected onto the ground next to the right-hand side of the vehicle 1. As an example, an image of a warning signal 51 is shown in **Fig. 5****.** The ground on which the vehicle is standing is denoted with the reference numeral 33. To the right of the vehicle 1, the ground 31 is inclined downward. In this example, the ground surface 33 is horizontal. The horizontal surface extends to the right of the vehicle where points on the ground 37 and 38 are indicated. At point 37, the inclined surface 31 extends further to the right side of the vehicle through points 36 and 35.

**Fig. 3** is a x-y graph of the intensities of the situation of **Fig. 2****.** The surface distance measurement device 17 in the environmental representation device 14 is used to determine geometrical data on the surfaces of inclined ground 31 and horizontal ground 33 on which the vehicle is standing. The surface distance measurement device 17 determines the surface for the projection as horizontal between 37 and 38 and as inclined between 37 and 35. These positions are shown on the horizontal x-axis of the graph in **Fig. 3****.** For easier reference, dashed lines parallel to the y-axis of the graph indicate these positions as well. The y-axis indicates the intensity of the light of the image as it is projected on surfaces 31 and 33.

Without any modification of the signal, the signaling device 20 calculates the light signal for a horizontal surface which extends from point 38 to point 37 and further to a point above point 35 in **Fig. 2****.** This horizontal surface is indicated by a dotted line in **Fig. 2****.** The intensity of the projected image thus results as indicated by line 47 for points 38 and 37 on surface 33. Because of the inclination of the surface 31 between points 35 and 37, the intensity of the projected image decreases with increasing distance from point 37, reaching its lowest value at point 35. This is indicated by line 46. In other words, depending on the inclination of surface 31, the projected image on surface 31 will fade away more and more towards point 35. Therefore, the signaling device 20 uses the data from the surface distance measurement device 17 in the environmental representation device 14 to increase the intensity of the projected image parts gradually between points 37 with the highest value for the intensity at point 35. This results in an intensity as indicated by lines 49 and 48 which is identical for all points between points 38 and 35. This is an example of determining data representing the surface onto which the light signal is to be projected, wherein these data are three-dimensional spatial coordinates of inclined surface 31 and horizontal ground surface 33 on which the vehicle is standing.

**Fig. 4** is a second schematic front view of a vehicle emitting a warning signal. It shows the vehicle 1, and an observer 2. The observer 2 is shown as a symbol of a human eye. The vehicle 1 is shown with a transducer 21 on the right-hand mirror and with headlights 24 and 25.

A warning signal is to be projected onto the ground next to the right-hand side of the vehicle 1. This warning signal is to be perceived by the observer 2. The position of the observer 2 is determined from image classification device 15 and head box determination and/or eye tracking device 16 based on data from the camera system 11 and radar/lidar sensor 12 (see **Fig.1**). This is an example of the part of the method of determining a position of an observer of the projected light signal in three-dimensional space relative to the vehicle. The decision logic 19 will decide which image should be displayed based on information from the camera system and other sensors. Such an image to be displayed can be a warning that an opening of the right-hand door of the vehicle 1 is imminent. This is an example of the part of the method of determining a first image which is to be projected onto the surface by means of the light signal.

As an example, an image of a warning signal 51 is shown in **Fig. 5****.** The ground on which the vehicle is standing is denoted with the reference 33. There is a curb 32 to a sidewalk 31. The observer 2 is standing on the sidewalk 31. Because of this curb 32, the observer 2 is not able to perceive any light signal projected into the area 45, which is depicted as shaded. The surface distance measurement device 17 in the environmental representation device 14 is used to determine geometrical data on the surfaces of sidewalk 31, curb 32 and ground 33 on which the vehicle is standing. This is another example of determining data representing the surface onto which the light signal is to be projected, wherein these data are three-dimensional spatial coordinates of the surfaces of sidewalk 31, curb 32 and ground 33 on which the vehicle is standing.

If the warning signal 51 is to be projected between points 41 and 44, the transducer 21 has to project a first part of the light signal to the area between the points 41 and 42 and a second part of the light signal to the area between the points 43 and 44.

It should be noted that this modification of the light signal is strongly dependent on the position of the observer 2. Should the observer 2 be located inside the vehicle 1 (not shown in **Fig. 4**), the projection of the warning signal would also include part of the image of the warning signal to be projected onto curb 32. In other words, the shaded area 45 is not visible to an observer 2 as shown in **Fig. 5****.** Therefore, an image for this observer 2 cannot be projected into area 45. In contrast, for an observer inside vehicle 1, the projection of the light signal must absolutely include the area 45 in order to avoid gaps in the projected image.

Data from the camera system 11 can also be used by the optical properties determination device 18 to determine the optical properties of the surfaces of sidewalk 31, curb 32 and/or ground 33 on which the vehicle 1 is standing. These optical properties are color, reflectivity and reflection properties like diffuse or mirror-like. These optical data are also influenced by environmental conditions. For example, the reflection property becomes more mirror-like for a wet surface and more diffuse when the surface of the ground is covered by frost in cold temperatures during winter. Therefore, it is also helpful to use data from the temperature sensor and the rain sensor in order to determine environmental properties in the periphery of vehicle 1 using the environmental representation device 14.

**Fig. 6** shows the image of the warning signal as it is being projected by transducer 21. As described above, the first part 52 of the light signal is projected between the lines 61 and 62. The line 61 is going through the point 41 and is vertical to the plane of **Fig. 4****.** The line 62 is going through the point 42 and is vertical to the plane of **Fig. 4****.** In this way, the observer 2 is enabled to perceive the left-hand part 52 of the image 51 on the surface of the sidewalk 31. The second part 53 of the light signal is projected between the lines 63 and 64. The line 63 is going through the point 43 and is vertical to the plane of **Fig. 4****.** The line 64 is going through the point 44 and is vertical to the plane of **Fig. 4****.** In this way, the observer 2 is enabled to perceive the right-hand part 53 of the image 51 on the surface of ground 33 on which the vehicle is standing. **Fig. 6** shows an example of the modification of the light signal so that the image 51 which is projected onto the surfaces 31 and 33 can be visually correctly perceived as the first image by the observer 2.

It is further helpful to modify the light signal in color and brightness based on the data on optical properties of the surfaces of sidewalk 31 and ground 33 on which the vehicle is standing and based on environmental properties in the periphery of the vehicle 1.

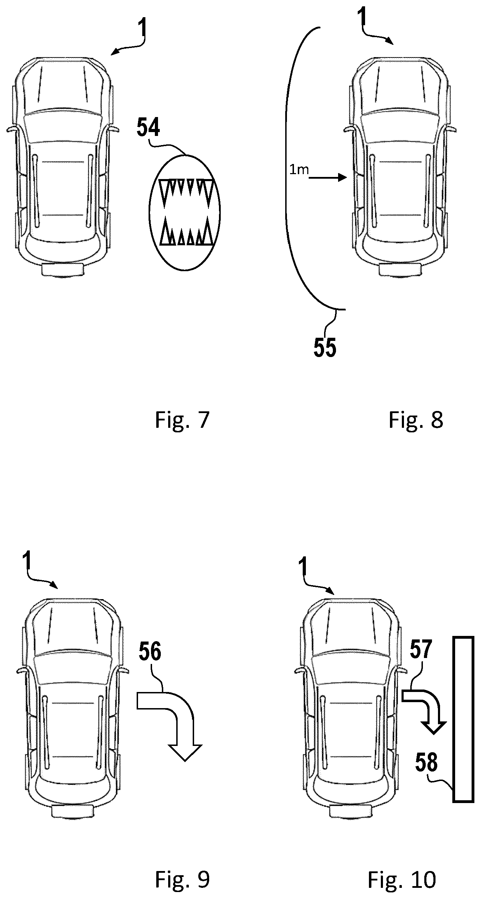

**Fig. 7** is a top view of a road vehicle emitting an optical light signal. In the same way as described above in connection with **Figs. 4 to 6****,** the decision logic device 19 of the vehicle 1 has arrived at the conclusion that an animal is approaching the vehicle 1. Based on data from image classification device 15, the decision logic device 19 decides that the animal approaching the vehicle is a herbivore. Further the decision logic device 19 sends an instruction to the signaling device 20 to display the image 54 of the jaws of the carnivore. In this case the modification consists in displaying the image 54 in a color which serves as a deterrent for the herbivore. For deer, this color can be blue.

**Fig. 8** is a second top view of a road vehicle emitting an optical light signal. In the same way as described above in connection with **Figs. 4 to 6****,** the decision logic device 19 of the vehicle 1 has arrived at the conclusion that another vehicle is approaching the vehicle 1. The decision logic device 19 sends an instruction to the signaling device 20 so that it causes the transducer 21 to display an image 55 to display the safety distance by a line and the safety distance in characters, in this example "1m". Both the position of the line and the characters indicating the safety distance can be modified according to local regulations and the distance measuring units in the respective locality of the vehicle 1.

Similar to **Fig. 8** it is also possible that the road vehicle emits a different optical signal so that an emergency corridor is displayed on the surface of the road. The decision logic device 19 has derived from the sound of a siren of an emergency vehicle that such a vehicle is approaching. The sound of the siren is detected by the microphone 13 and will have been processed by the environmental detection device 14.

**Fig. 9** is a third top view of a road vehicle emitting an optical light signal. When the right-hand door of the vehicle 1 is about to be opened, the decision logic device 19 may display the image 56 of an arrow. This arrow serves to indicate the suggested walking direction of the passenger who is about to exit the vehicle.

**Fig. 10** is a fourth top view of a road vehicle emitting an optical light signal. The situation is very similar to the situation depicted in **Fig. 9****.** However, there is a wall 58 which is obstructing the surface area which is needed for projecting the arrow 56. Therefore, the arrow 56 is not displayed. Instead, the image is modified so that a smaller arrow 57 is projected by the transducer 21.

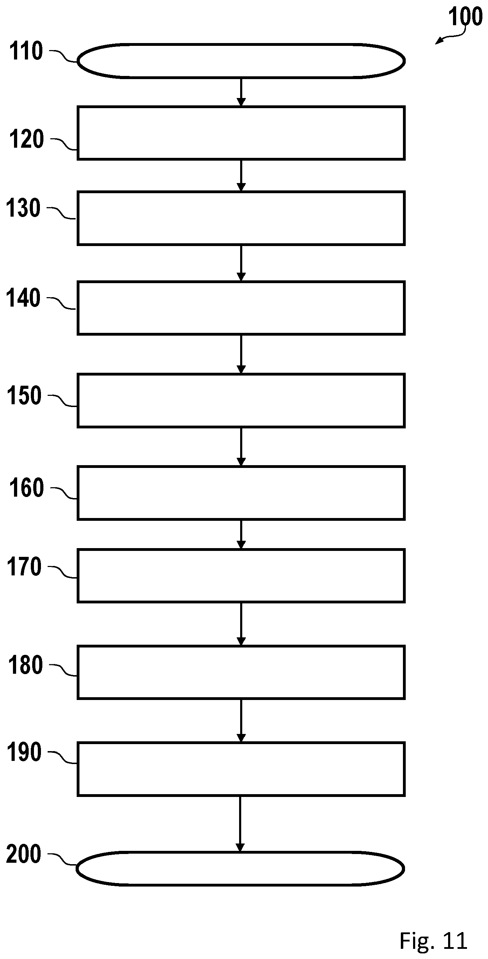

**Fig. 11** is a flow diagram of the method 100 to modify a light signal. The method starts at 110. At 120, the position of the observer 2 relative to the vehicle 1 is determined in terms of geometrical three-dimensional data of the observer image classification device in the environmental representation device. At 130, the position of the observer is determined in more detail by the head box determination and/or eye tracking device. At 140, the first image is determined by the decision logic device 19. At 150, data representing the three-dimensional spatial coordinates of the surface on which the first image is to be projected are determined by the surface distance measurement device 17. At 160, data representing the optical properties of the surface on which the first image is to be projected are determined by the optical properties determination device 18. At 170, data representing the environmental properties in the periphery of the vehicle 1 are determined. At 180, the presence of obstructions is determined by the environmental representation device 14 using the image classification device 15. At 190, the optical light signal is modified based on the data obtained in the parts of the method numbered 120 to 180. The method ends at 200.

### LIST OF REFERENCE NUMERALS

- 1: road vehicle
- 2: observer
- 10: controller
- 11: camera system
- 12: radar / lidar sensors
- 13: outer microphone
- 14: environmental representation
- 15: image classification
- 16: head box determination / eye tracking
- 17: surface distance measurement
- 18: optical properties determination
- 19: decision logic
- 20: signaling device
- 21: transducer
- 24, 25: headlight
- 31, 33: surface segment
- 35, 36, 37, 38: points on surface segment
- 41, 42, 43, 44: projection / observation point
- 45: region blocked for the observer
- 46, 47: image intensity (not modified)
- 48, 49: image intensity (modified)
- 51: warning signal
- 52, 53: part of the warning signal
- 54: deterrent symbol
- 55: marking safety distance
- 56, 57: arrow
- 58: obstruction / wall
- 61, 62, 63, 64: projection line
- 100: method of modifying a signal
- 110: start of the method
- 120: determining position of the observer
- 130: determining position of headbox/eye
- 140: determining first image
- 150: determining data representing spatial coordinates of the surface
- 160: determining data representing optical properties of the surface
- 170: determining data representing environmental properties
- 180: determining data representing an obstruction
- 190: modifying the optical light signal
- 200: end of the method

## Claims

1. Method (100) of modifying an optical light signal which is to be projected from a vehicle (1) onto a surface (31, 33) in the periphery of the vehicle (1), the method comprising:
determining (140) a first image (51) which is to be projected onto the surface by means of the light signal;
determining (150), using an environment representation device (14) which comprises a surface distance measurement device (17) and an optical properties determination device (18), data representing the surface (31, 33) onto which the light signal is to be projected;
modifying (190) the light signal so that the image which is projected onto the surface (31, 33) can be visually correctly perceived as the first image by an observer (2) based on the data representing the surface (31, 33);
wherein the data representing the surface (31, 33) comprise at least three-dimensional spatial coordinates of the surface (31, 33).

2. Method (100, 160) according to claim 1, further comprising:
determining (120) a position of an observer of the projected light signal in three-dimensional space relative to the vehicle (1);
modifying (190) the light signal so that the image which is projected onto the surface (31, 33) can be visually correctly perceived as the first image by the observer (2) based on the position of the observer (2).

3. Method (100, 160) according to claim 1 or 2, wherein the modification of the light signal is based on optical properties of the surface (31, 33).

4. Method (100, 170) according to any of claims 1 to 3, wherein the modification of the light signal is based on data representing environmental conditions.

5. Method (100) according to any of claims 1 to 4, wherein the determination of the position of the observer (2) comprises determining a position of a headbox or an eye position of the observer (2).

6. Method (100) according to any of claims 1 to 5, wherein the modification of the light signal is based on the presence of an obstruction (58).

7. Computer program comprising instructions which, when the program is executed by a computer (10), cause the computer (10) to carry out the method (100) according to any of claims 1 to 6.

8. Computer readable storage medium comprising instructions which, when executed by a computer (10), cause the computer (10) to carry out the method (100) according to any of claims 1 to 6.

9. Signaling device (12) of a vehicle (1), configured to receive, from a decision logic device (19), information representing a first image;
from an environmental representation device (14) comprising a surface distance measurement device (17) and an optical properties determination device (18), information representing an environment of the vehicle (1);
the signaling device (12) comprising at least one optical transducer (21) configured to project optical light signals onto a surface (31, 33) in the periphery of the road vehicle (1), wherein the information representing an environment of the vehicle comprises data representing
said surface (31, 33), wherein the data representing the surface (31, 33) comprise at least three-dimensional spatial coordinates of the surface (31, 33); the signaling device (12) being configured to modify the optical light signal based on the data representing the surface (31, 33) so that the optical light signal can be perceived visually correctly as a first image (51) by an observer (2).

10. Signaling device (12) according to claim 9 being configured to modify the optical light signal according to data representing a position of a headbox or an eye position of the observer (2).

11. Road vehicle (1) comprising:
a signaling device (12) according to claim 9 or 10.

## Patentansprüche

1. Verfahren (100) zum Modifizieren eines optischen Lichtsignals, das von einem Fahrzeug (1) auf eine Oberfläche (31, 33) in der Peripherie des Fahrzeugs (1) projiziert werden soll, wobei das Verfahren Folgendes umfasst:
Bestimmen (140) eines ersten Bildes (51), das mittels des Lichtsignals auf die Oberfläche projiziert werden soll; Bestimmen (150), unter Verwendung einer Umgebungsdarstellungsvorrichtung (14), die eine Oberflächenabstandsmessvorrichtung (17) und eine Bestimmungsvorrichtung für optische Eigenschaften (18) umfasst, von Daten, die die Oberfläche (31, 33) repräsentieren, auf die das Lichtsignal projiziert werden soll;
Modifizieren (190) des Lichtsignals, so dass das Bild, das auf die Oberfläche (31, 33) projiziert wird, basierend auf den Daten, die die Oberfläche (31, 33) repräsentieren, durch einen Beobachter (2) visuell korrekt als das erste Bild wahrgenommen werden kann;
wobei die Daten, die die Oberfläche (31, 33) repräsentieren, mindestens dreidimensionale räumliche Koordinaten der Oberfläche (31, 33) umfassen.

2. Verfahren (100, 160) nach Anspruch 1, das ferner Folgendes umfasst:
Bestimmen (120) einer Position eines Beobachters des projizierten Lichtsignals in einem dreidimensionalen Raum relativ zu dem Fahrzeug (1);
Modifizieren (190) des Lichtsignals, so dass das Bild, das auf die Oberfläche (31, 33) projiziert wird, basierend auf der Position des Beobachters (2), durch den Beobachter (2) visuell korrekt als das erste Bild wahrgenommen werden kann.

3. Verfahren (100, 160) nach Anspruch 1 oder 2, wobei die Modifikation des Lichtsignals auf optischen Eigenschaften der Oberfläche (31, 33) basiert.

4. Verfahren (100, 170) nach einem der Ansprüche 1 bis 3, wobei die Modifikation des Lichtsignals auf Daten basiert, die Umgebungsbedingungen repräsentieren.

5. Verfahren (100) nach einem der Ansprüche 1 bis 4, wobei die Bestimmung der Position des Beobachters (2) Bestimmen einer Position einer Kopfbox oder einer Augenposition des Beobachters (2) umfasst.

6. Verfahren (100) nach einem der Ansprüche 1 bis 5, wobei die Modifikation des Lichtsignals auf dem Vorhandensein eines Hindernisses (58) basiert.

7. Computerprogramm, das Anweisungen umfasst, die, wenn das Programm durch einen Computer (10) ausgeführt wird, den Computer (10) veranlassen, das Verfahren (100) nach einem der Ansprüche 1 bis 6 auszuführen.

8. Computerlesbares Speichermedium, das Anweisungen umfasst, die, wenn sie durch einen Computer (10) ausgeführt werden, den Computer (10) veranlassen, das Verfahren (100) nach einem der Ansprüche 1 bis 6 auszuführen.

9. Signalgerät (12) eines Fahrzeugs (1), das ausgelegt ist zum Empfangen, von einer Entscheidungslogikvorrichtung (19), von Informationen, die ein erstes Bild repräsentieren;
von einer Umgebungsdarstellungsvorrichtung (14), die eine Oberflächenabstandsmessvorrichtung (17) und eine Bestimmungsvorrichtung für optische Eigenschaften (18) umfasst, von Informationen, die eine Umgebung des Fahrzeugs (1) repräsentieren;
wobei das Signalgerät (12) mindestens einen optischen Wandler (21) umfasst, der dazu ausgelegt ist, optische Lichtsignale auf eine Oberfläche (31, 33) in der Peripherie des Straßenfahrzeugs (1) zu projizieren, wobei die Informationen, die eine Umgebung des Fahrzeugs repräsentieren, Daten umfassen, die die Oberfläche (31, 33) repräsentieren, wobei die Daten, die die Oberfläche (31, 33) repräsentieren, mindestens dreidimensionale räumliche Koordinaten der Oberfläche (31, 33) umfassen; wobei das Signalgerät (12) dazu ausgelegt ist, das optische Lichtsignal basierend auf den Daten, die die Oberfläche (31, 33) repräsentieren, so zu modifizieren, dass das optische Lichtsignal durch einen Beobachter (2) visuell korrekt als ein erstes Bild (51) wahrgenommen werden kann.

10. Signalgerät (12) nach Anspruch 9, das dazu ausgelegt ist, das optische Lichtsignal gemäß Daten zu modifizieren, die eine Position einer Kopfbox oder eine Augenposition des Beobachters (2) repräsentieren.

11. Straßenfahrzeug (1), das Folgendes umfasst:
ein Signalgerät (12) nach Anspruch 9 oder 10.

## Revendications

1. Procédé (100) de modification d'un signal lumineux optique qui doit être projeté à partir d'un véhicule (1) sur une surface (31, 33) dans la périphérie du véhicule (1), le procédé comprenant :
la détermination (140) d'une première image (51) qui doit être projetée sur la surface au moyen du signal lumineux ;
la détermination (150), à l'aide d'un dispositif de représentation d'environnement (14) qui comprend un dispositif de mesure de distance de surface (17) et un dispositif de détermination de propriétés optiques (18),
de données représentant la surface (31, 33) sur laquelle le signal lumineux doit être projeté ;
la modification (190) du signal lumineux de sorte que l'image qui est projetée sur la surface (31, 33) peut être perçue visuellement correctement comme la première image par un observateur (2) sur la base des données représentant la surface (31, 33) ;
dans lequel les données représentant la surface (31, 33) comprennent au moins des coordonnées spatiales tridimensionnelles de la surface (31, 33).

2. Procédé (100, 160) selon la revendication 1, comprenant en outre :
la détermination (120) d'une position d'un observateur du signal lumineux projeté dans un espace tridimensionnel par rapport au véhicule (1) ;
la modification (190) du signal lumineux de sorte que l'image qui est projetée sur la surface (31, 33) peut être perçue visuellement correctement comme la première image par l'observateur (2) sur la base de la position de l'observateur (2).

3. Procédé (100, 160) selon la revendication 1 ou 2, dans lequel la modification du signal lumineux est basée sur des propriétés optiques de la surface (31, 33).

4. Procédé (100, 170) selon l'une quelconque des revendications 1 à 3, dans lequel la modification du signal lumineux est basée sur des données représentant des conditions environnementales.

5. Procédé (100) selon l'une quelconque des revendications 1 à 4, dans lequel la détermination de la position de l'observateur (2) comprend la détermination d'une position d'un boîtier de phare ou d'une position de l'œil de l'observateur (2).

6. Procédé (100) selon l'une quelconque des revendications 1 à 5, dans lequel la modification du signal lumineux est basée sur la présence d'une obstruction (58).

7. Programme informatique comprenant des instructions qui, lorsque le programme est exécuté par un ordinateur (10), amènent l'ordinateur (10) à mettre en œuvre le procédé (100) selon l'une quelconque des revendications 1 à 6.

8. Support de stockage lisible par ordinateur comprenant des instructions qui, lorsqu'elles sont exécutées par un ordinateur (10), amènent l'ordinateur (10) à mettre en œuvre le procédé (100) selon l'une quelconque des revendications 1 à 6.

9. Dispositif de signalisation (12) d'un véhicule (1), configuré pour recevoir, en provenance d'un dispositif de logique décisionnelle (19), des informations représentant une première image ;
à partir d'un dispositif de représentation environnementale (14) comprenant un dispositif de mesure de distance de surface (17) et un dispositif de détermination de propriétés optiques (18), des informations représentant un environnement du véhicule (1) ;
le dispositif de signalisation (12) comprenant au moins un transducteur optique (21) configuré pour projeter des signaux lumineux optiques sur une surface (31, 33) dans la périphérie du véhicule routier (1), dans lequel les informations représentant un environnement du véhicule comprennent des données représentant ladite surface (31, 33), dans lequel les données représentant la surface (31, 33) comprennent au moins des coordonnées spatiales tridimensionnelles de la surface (31, 33) ;
le dispositif de signalisation (12) étant configuré pour modifier le signal lumineux optique sur la base des données représentant la surface (31, 33) de sorte que le signal lumineux optique peut être perçu visuellement correctement comme une première image (51) par un observateur (2).

10. Dispositif de signalisation (12) selon la revendication 9, configuré pour modifier le signal lumineux optique en fonction de données représentant une position d'un boîtier de phare ou une position de l'œil de l'observateur (2).

11. Véhicule routier (1), comprenant :
un dispositif de signalisation (12) selon la revendication 9 ou 10.
